# EUROPEAN PATENT APPLICATION

(11) **EP 2 091 122 A1**
(43) Date of publication of application: **19.08.2009**
(21) Application number: 08151459.8
(22) Date of filing: 14.02.2008
(51) Int. Cl.: H02H 7/16, H02H 7/18, H02J 7/00

(54) **Overvoltage protection circuit**

(71) Applicant: Vlaamse Instelling voor Technologisch Onderzoek (VITO), 2400 Mol (BE)
(72) Inventor: Fransen, Gert, B-2490, BALEN (BE); Weyen, Dominique, B-3920, LOMMEL (BE); Verhaeven, Erik, B-2460, KASTERLEE (BE)
(74) Representative: pronovem

(57) **Abstract**

The present invention is related to a circuit for overvoltage protection of a rechargeable energy storage device (1), said circuit comprising:
• a voltage divider (R1,R2) coupled in parallel to said storage device,
• a switch (7) coupled in parallel to said storage device, and arranged to close when the voltage at an intermediate point (10) of said voltage divider reaches a pre-determined reference level,

**characterized in that** said switch (7) is a transistor coupled in reverse polarity with respect to the storage device (1).

## Description

### Field of the Invention

The present invention is related to energy storage devices such as ultracapacitors or lithium batteries, and in particular to a means for protecting such devices from overvoltage.

### State of the art.

Overvoltage circuits exist for ultracapacitors or lithium batteries or other types of storage devices, said circuits comprising a voltage divider arranged in parallel to the ultracap/battery, and a switch arranged to close, when a predefined voltage level is reached at an intermediate point of the voltage divider. Once the switch is closed, energy is dissipated in a resistor arranged in series with the switch.

In this type of circuit high dissipation currents are produced in the resistor in series with the switch. Given the small size of a resistor on a circuit board, removal of this heat is difficult.

### Aims of the invention

The present invention aims to provide an overvoltage circuit that does not suffer from the drawbacks described above.

### Summary of the invention

The invention is related to a circuit as disclosed in the appended claims. In particular, the invention is related to a circuit for overvoltage protection of a rechargeable energy storage device, said circuit comprising :
- a voltage divider (R1,R2) coupled in parallel to said storage device,
- a switch coupled in parallel to said storage device, and arranged to close when the voltage at an intermediate point of said voltage divider reaches a pre-determined reference level,
**characterized in that** said switch is a transistor coupled in reverse polarity with respect to the storage device.
Specific embodiments are defined by combinations of the independent claim with one or more of the dependent claims.

### Brief description of the figures

Figure 1 illustrates the circuit of the invention according to a first embodiment.

Figure 2 shows a circuit according to a second embodiment of the invention.

Figure 3 shows a preferred version of a circuit according to the second embodiment.

Figure 4 shows an example of a connecting plate used to connect two ultracap cells.

### Detailed description of the invention

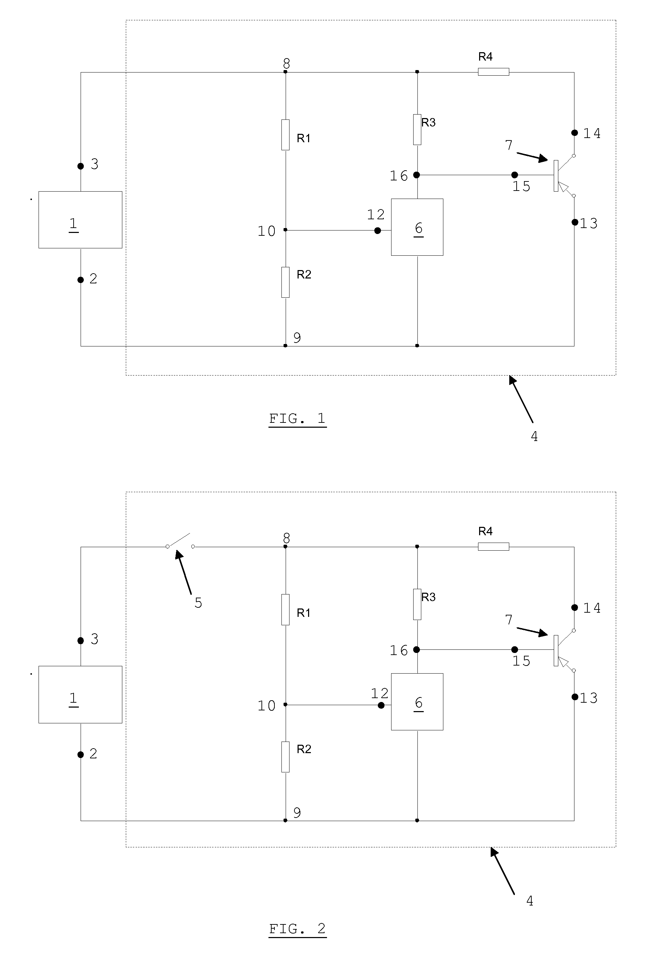

With reference to figure 1, the device of the invention according to a first embodiment is described hereafter. The device corresponds to an electrical circuit 4. An energy storage device 1, such as a lithium battery or an ultracapacitor, is shown. It is to be understood that this device is normally connected in series with a number of similar devices (not shown), to form an energy source, for example for vehicle applications. Storage device 1 is also referred to as a 'cell', which terminology will be used in the following description. The cell 1 is connected between a first and second terminal 2 and 3 which are respectively arranged to be at a reference (e.g. ground) voltage and at an operational cell voltage. An overvoltage protection circuit 4 (also referred to as a voltage balancing circuit) is connected in parallel to the cell 1. The circuit 4 comprises a voltage divider (R1, R2), a device 6 for defining a reference voltage (e.g. a low-voltage adjustable precision shunt regulator), and a switch 7. The voltage divider comprises two resistors R1 and R2 connected in series between first terminal 8 and second terminal 9, with intermediate terminal 10 in between the resistors. From intermediate terminal 10 of the voltage divider, a connection is present to the reference terminal 12 of the reference voltage device 6. The reference voltage device is arranged to conduct current when the voltage on the reference terminal reaches a pre-determined level (e.g. 1.24V). The switch 7 is connected in parallel with the voltage divider and thus with the cell 1. The switch is connected between terminals 13 and 14 and further comprises a control terminal 15 (e.g. the base contact if the switch 7 is a pnp transistor). Terminal 13 is connected to the cell's reference terminal 2, while terminal 14 is connected, preferably via a resistor R4, to the cell's power terminal 3. A resistor R3 is coupled between the first terminal 8 of the voltage divider and the voltage reference device 6. The control terminal 15 is connected to intermediate point 16 between R3 and the voltage reference device 6.

According to the invention, the switch 7 is a transistor, preferably a bipolar transistor, coupled in reverse polarity with respect to the cell 1. In other words, the transistor is coupled in such a way that it can only conduct current from the operational terminal (or positive terminal) 3 to the reference terminal 2 (or negative terminal) of the cell, by going into reverse breakdown mode. Figure 1 shows the preferred case of a pnp transistor. It was found that the operation of the transistor in reverse breakdown can replace a known type of switch (e.g. a forward-biased pnp) in this type of overvoltage protection circuit. The advantage obtained by this innovation is that no large (in term of ohms) resistor is required for heat dissipation when the circuit is activated (i.e. when the switch 7 closes). In stead of this, most of the heat dissipation takes place in the transistor itself. The physical properties of a pnp transistor for example, as it is built onto a circuit board, in terms of its size and connectivity, allow for a more efficient heat removal, compared to a (physically small) resistor. In reverse mode (junction with reverse biasing) the majority carriers are drawn away from the junction. This action widens the depletion region and increases the barrier potential reducing the conductivity. This results into a higher internal impedance.

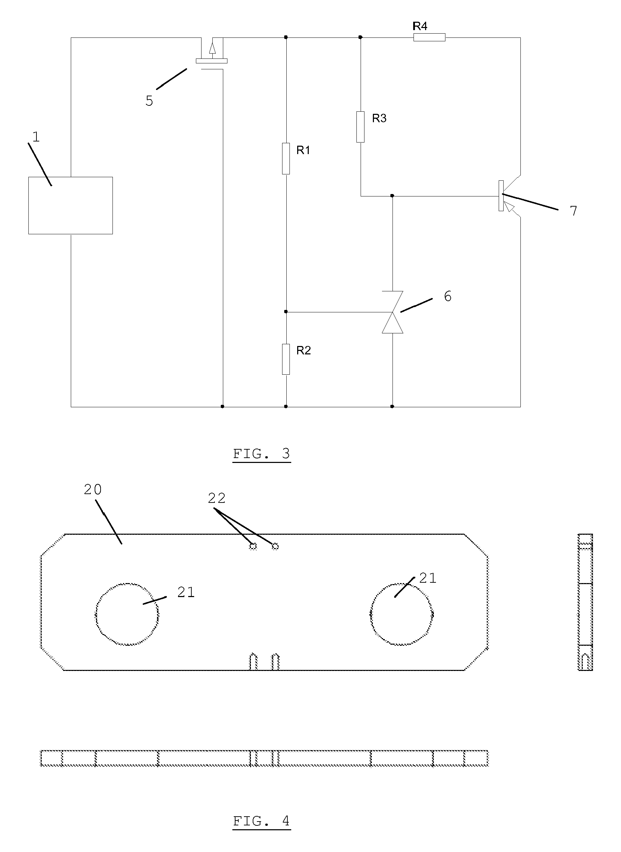

In a typical assembly type of storage cells in series, these cells are connected together by metal plates. For this type of cell-arrangement, it is possible to take advantage of the connecting plates between neighbouring cells, in order to remove heat from the transistors, by assembling the circuit boards carrying the circuit of the invention, in close proximity to these connecting plates. An example of such a connecting plate 20 is shown in figure 4, which is used to connect two ultracap cells. The ultracaps are connected at holes 21. Small holes 22 are present in the plates, for attaching the printed circuit of the invention. In this way, heat is removed efficiently from the circuit to the connecting plate. The illustrates an effective way of removing heat from the circuit, taking full advantage of the size and connectivity of the transistor 7. The invention is however not limited by this exemplary case, and is defined only by the circuit as such.

Figure 2 shows a second embodiment of the circuit of the invention, further comprising a second switch 5, arranged in series with the cell 1. The second switch 5 may be a FET device or any other suitable device. It is connected between the cell 1 and the voltage divider R1, R2. To be more precise, the second switch has one terminal connected directly to the positive terminal 3 of the cell, and the other terminal connected to the first terminal 8 of the voltage divider. The second switch 5 is controlled on the basis of the voltage over the cell 1. When said voltage reaches a pre-defined threshold, the switch 5 closes.

Figure 3 shows a preferred embodiment, in which the second switch 5 is a Field Effect Transistor (FET). The switch 7 is a bipolar pnp transistor, e.g. of type MJD32C. Other types of transistors may be used in any combination, within the scope of the invention. The voltage reference device 6 is a low voltage adjustable precision shunt regulator, e.g. of type TL431.

The circuit of figure 3 operates as follows. When the voltage produced by the cell 1 (when the cell is delivering power), or applied to the cell 1 (when the cell is being charged), exceeds a pre-defined threshold value, the second switch 5 closes and current flows through the voltage divider R1-R2. When the voltage at intermediate terminal 10 reaches the pre-defined reference voltage of the voltage reference device 6, this device becomes conductive, putting the control terminal 15 at a pre-determined voltage level (controlled by R3), suitable for activating the pnp 7 in reverse breakdown. At that moment, substantially all of the current passes through the reverse-biased pnp 7, whereby the energy of said current is dissipated by the internal resistance of the transistor 7, through its operation in reverse breakdown mode.

The circuit thus provides an overvoltage protection in two steps :
- activation of the switch 5 when a first voltage threshold is reached. This allows energy dissipation starting at a lower voltage level compared to the prior art devices. This is only a small dissipation from the measurement circuit.
- activation of the pnp 7 when a second voltage threshold is reached.
   There is essentially no dissipation when the voltage level is lower then the first voltage threshold.

The circuit of figure 1 is powered by the ultracapacitor or lithium battery 1, and requires no external power supply.

The second switch 5 has a double function :
- dissipating energy from a first - lower - threshold voltage, through the voltage divider R1/R2.
- if the switch is a FET-transistor, protecting the cell against inverse polarity of the cell. In the case of a FET, the switch would no longer be able to close if the polarity of terminals 2 and 3 would be inversed, this due to the specific operation of the FET-device (as understandable to the skilled person).

The circuit of the invention also improves the balance during charging of a number of cells in series, each cell being equipped with an overvoltage circuit according to the invention. When one cell receives a voltage above a threshold, this voltage is limited by the overvoltage circuit, and the total charge voltage is redistributed over the remaining cells.

The invention is equally related to a circuit as shown in figure 2 or 3, i.e. including the series switch 5 but wherein the parallel switch 7 is connected in normal forward polarity with respect to the storage device 1.

## Claims

1. A circuit for overvoltage protection of a rechargeable energy storage device (1), said circuit comprising :
• a voltage divider (R1,R2) coupled in parallel to said storage device,
• a switch (7) coupled in parallel to said storage device, and arranged to close when the voltage at an intermediate point (10) of said voltage divider reaches a pre-determined reference level,
**characterized in that** said switch (7) is a transistor coupled in reverse polarity with respect to the storage device (1).

2. The circuit according to claim 1, wherein said transistor (7) is a bipolar transistor.

3. The circuit according to claim 1 or 2, further comprising a second switch (5) connected in series between said storage device (1) and said voltage divider (R1,R2), and arranged to close when the voltage over said storage device (1) reaches a predefined threshold.

4. The circuit according to claim 1, wherein said first and second switch (7,5) are FET or bipolar transistors.

5. The circuit according to any one of claims 1 to 4, comprising a low voltage shunt regulator (6), arranged to conduct when the voltage at said intermediate point (10) reaches said pre-determined reference level.

6. An energy source comprising a series arrangement of a number of storage devices equipped with a circuit according to claim 1.

7. An energy source according to claim 6, wherein said storage devices are lithium batteries or ultracapacitors.
